# EUROPÄISCHE PATENTSCHRIFT

(11) **EP 2 349 620 B1**
(45) Veröffentlichungstag und Bekanntmachung des Hinweises auf die Patenterteilung: **23.11.2016**
(21) Anmeldenummer: 09756649.1
(22) Anmeldetag: 15.10.2009
(51) Int. Cl.: B23D 27/02, A62B 3/00

(54) **SCHNEIDVORRICHTUNG, INSBESONDERE BERGESCHERE**
CUTTING DEVICE, PARTICULARLY RESCUE SCISSORS
DISPOSITIF DE DÉCOUPAGE, EN PARTICULIER CISAILLE MINIÈRE

(30) Priorität: 16.10.2008 AT 58908 U
(43) Veröffentlichungstag der Anmeldung: 03.08.2011
(73) Patentinhaber: Weber-Hydraulik GmbH, 4460 Losenstein (AT)
(72) Erfinder: STROHMEIER, Kurt, A-4421 Aschach (AT); HERWIG, Peter, 98593 Floh-Seligenthal (DE)
(74) Vertreter: Burger, Hannes
(86) Internationale Anmeldenummer: PCT/AT2009/000402
(87) Internationale Veröffentlichungsnummer: WO 2010/042966

(56) Entgegenhaltungen:
- EP-A1- 1 533 063
- EP-A2- 0 501 408
- CH-A- 260 368
- FR-A1- 2 715 095
- JP-A- 3 131 480
- US-A- 2 203 455
- US-A- 4 249 308

## Beschreibung

Die Erfindung betrifft eine Schneidvorrichtung gemäß dem Oberbegriff des Anspruchs 1, deren Merkmale durch EP0501408 A offenbart werden*.*

Eine derartige Schneidvorrichtung ist beispielsweise aus FR 2 715 095 A1 bekannt, wobei Schneidvorrichtungen dieser Art vorteilhaft für die Bergung von verunfallten Personen aus Fahrzeugen eingesetzt werden, wenn die Türen eines Fahrzeuges nach einem Unfall nicht mehr funktionsfähig sind und ein verunfalltes Fahrzeug zur Bergung von Personen aufgeschnitten werden muss. Eine derartige Schneidvorrichtung besitzt einen Rahmengrundkörper, an dem ein feststehendes Scherelement angeordnet ist, sowie ein hakenförmiges Schermesser, das mit Hilfe einer Antriebsvorrichturig gegen das feststehende Scherelement bewegbar ist und dabei einen zwischen dem beweglichen Schermesser und dem feststehenden Scherelement befindlichen Gegenstand durchschneiden kann, indem ein streifenförmiger Abschnitt aus dem Gegenstand herausgeschert bzw. ausgeklinkt wird und dadurch im Gegenstand eine Trennfuge entsteht. Durch ein Aneinandersetzen von streifenförmigen Ausklinkungen kann auch ein flächiger Gegenstand zerteilt werden und dadurch ein Fahrzeug zur Bergung einer Person geöffnet werden. Damit auch robuste und stabile Materialien, etwa Stahlbleche mit einer Dicke von über 1 cm auf diese Weise aufgeschnitten werden können, muss die Schneidvorrichtung sehr hohe Schnittkräfte bzw. Scherkräfte auf einen Gegenstand ausüben können und müssen derartige Schneidvorrichtungen einen sehr stabilen Aufbau besitzen. Nachteilig daran ist, dass dadurch das Gewicht einer solchen Schneidvorrichtung sehr hoch ist, etwa in einem Bereich von etwa 30 kg, und eine Bedienung für einen einzelnen Bediener im Allgemeinen nur sehr schwer oder gar nicht möglich ist.

Aus US 2,329,387 A ist weiters ein Handwerkzeug zum Schneiden von Blech beschrieben, bei dem durch eine Schwenkbewegung zweier Handgriffe, die an einem zylindrischen Hohlkörper angebracht sind, ein axial im Hohlkörper bewegliches Messer, dessen freies Ende einen Schneidkopf aufweist, während eines Schneidevorgangs in den Hohlkörper hineingezogen wird. Das Messer besitzt einen stangenförmigen Fortsatz, an dem die Handgriffe über eine Verbindungsstange angreifen und das Messer hin- und herbewegen. Aufgrund der Handbetätigung dieser Blechschere ist der Einsatzbereich beschränkt und kann diese beispielsweise kaum für die Bergung von Personen aus verunfallten Fahrzeugen eingesetzt werden. Durch die relativ geringen Abmessungen dieser Blechschere gibt dieses Dokument keine Anregungen die Bedienung einer Schneidvorrichtung zu erleichtern.

Aufgabe der Erfindung besteht darin, eine derartige Schneidvorrichtung bereitzustellen, die bei unverändert hoher Schnittleistung eine leichtere Bedienbarkeit ermöglicht..

Die Aufgabe der Erfindung wird gelöst durch eine Schneidvorrichtung mit den Merkmalen des Anspruchs 1.

Durch die erfindungsgemäße Ausbildung des Rahmengrundkörpers und/oder der Antriebsvorrichtung im Wesentlichen aus einem Leichtmetall oder einer Leichtmetalllegierung ist überraschenderweise ohne Einbußen an der erforderlichen Festigkeit des Rahmengrundkörpers eine beträchtliche Gewichtsersparnis einer derartigen Schneidvorrichtung möglich. Die Dichte des Materials des Rahmengrundkörpers und oder der Antriebsvorrichtung beträgt dabei weniger als 5.000 kg/m³, insbesondere weniger als 3.000kg/m³. Gegenüber einem herkömmlichen Rahmengrundkörper aus Stahl sind zur Erzielung einer gleich bleibenden Festigkeit zwar größere Querschnittsdimensionen des Rahmengrundkörpers erforderlich, wobei jedoch trotz vergrößerter Querschnitte und entsprechender Volumszunahme des Rahmengrundkörpers insgesamt eine beträchtliche Gewichtserspamis erzielt werden kann. Während eine herkömmliche Schneidvorrichtung mit einem Rahmengrundkörper aus Stahl ein Einsatzgewicht von etwa 30 kg besitzt, kann das Einsatzgewicht einer erfindungsgemäßen Schneidvorrichtung etwa auf ca. 20 kg gesenkt werden, das heißt eine Gewichtserspamis von einem Drittel ist durch die erfindungsgemäße Ausführung des Rahmengrundkörpers bzw. der Antriebsvorrichtung möglich.

Die Antriebsvorrichtung ist insbesondere als Linearantrieb ausgebildet, der ein mit dem verstellbaren Schermesser verbundenes Verstellelement umfasst. Der Linearantrieb kann dabei beispielsweise als Gewindespindeltrieb ausgebildet sein, vorzugsweise ist der Linearantrieb jedoch durch einen Fluidzylinder bzw. Hydraulikzylinder gebildet, mit dem sich die erforderlichen hohen auf das Schermesser aufzubringenden Verstellkräfte bewirkt werden können. Teile der Antriebsvorrichtung, die aus Leichtmetall oder einer Leichtmetalllegierung gebildet sind können etwa bei einem Gewindespindeltrieb auch die Spindelmutter und die Gewindespindel sein, wobei die zusammenwirkenden, hochbelasteten Gewindeelemente aus einem verschleißfesten Material gebildet sein können, also etwa durch-hülsenartige Elemente, die die Bewegungsgewinde tragen. Bei einer Antriebsvorrichtung in Form eines Fluidzylinders bzw. Hydraulikzylinders kann insbesondere einer der Bestandteile, also der Zylinder, der Kolben oder die Kolbenstange im Wesentlichen aus dem Leichtmetall oder der Leichtmetalllegierung bestehen.

Der Rahmengrundkörper ist vorzugsweise einstückig aus Vollmaterial hergestellt, wodurch Verbindungselemente zum Zusammensetzen eines mehrteiligen Rahmengrundkörpers entfallen können. Funktionsflächen, die der Rahmengrundkörper ursprünglich nicht aufweist, etwa Bohrungen, Abflachungen, Ausnehmungen sind vorzugsweise durch ein spanabhebendes Verfahren, insbesondere Fräsen hergestellt und bewirken eine weitere Reduktion des Einsatzgewichts der Schneidvorrichtung. Zusätzlich können durch Bohrungen, Ausnehmungen, Abflachungen, Ausfräsungen usw. weitere Gestaltänderungen am Ausgangsgrundkörper vorgenommen werden, die lediglich der Gewichtsreduktion dienen. Bei der Herstellung des Rahmengrundkörpers kann weiters auch ein Schmiedeverfahren angewendet werden, um die erforderliche Zerspanarbeit zu reduzieren.

Bei einem Linearantrieb in Form eines Fluidzylinders bzw. Hydraulikzylinders kann insbesondere der Zylindermantel aus dem Leichtmetall bzw. der Leichmetalllegierung hergestellt sein, wodurch ebenfalls eine beträchtliche Gewichtsersparnis der Schneidvorrichtung erzielt werden kann. Zusätzlich oder alternativ kann auch der im Fluidzylinder bzw. Hydraulikzylinder verstellbare Kolben und die den Kolben mit dem Schermesser verbindende Kolbenstange aus einem Leichtmetall bzw. der Leichtmetalllegierung hergestellt sein. Das am Schermesser angreifende Verstellelement ist im Fall eines Fluidzylinders insbesondere direkt durch die im Fluidzylinder verstellbare Kolbenstange gebildet und können in diesem Fall Getriebeelemente zur Umwandlung der Kolbenbewegung in die Schermesserbewegung entfallen.

Das den Rahmengrundkörper und/oder die Antriebsvorrichtung aufbauende Leichmetall bzw. ein Bestandteil der Leichtmetalllegierung ist vorzugsweise ausgewählt aus einer Gruppe umfassend zumindest Aluminium, Magnesium und Titan. Diese Materialien weisen bei ausreichend hoher Festigkeit ein sehr geringes, spezifisches Gewicht auf, wodurch die Gewichtsersparnis einer erfindungsgemäßen Schneidvorrichtung dementsprechend hoch ist.

Der Rahmengrundkörper weist weiters eine das Schermesser zumindest teilweise aufnehmende Ausnehmung auf, die einen Bewegungsraum für das Schermesser im Inneren des Rahmengrundkörpers bildet, wodurch dieses gewissermaßen im Rahmengrundkörper geführt ist und während der Schneidbewegung ein unbeabsichtigtes Ausweichen des Schermessers gegenüber dem Rahmengrundkörper vermieden ist. Die Ausnehmung kann bei einem Rahmengrundkörper, der einstückig ausgeführt ist, etwa durch eine Fräsung hergestellt sein.

Der Rahmengrundkörper kann zumindest abschnittsweise eine kreiszylindrische Grundform aufweisen, wodurch die Schneidvorrichtung ergonomisch und leicht handhabbar ausgeführt werden kann und diese auch die für einen rauen Einsatz erforderliche hohe Stabilität und eine gute Führung für das Schermesser gewährleistet. Durch die größere Ausdehnung des Rahmengrundkörpers quer zur Schneidebene bzw. quer zur Schermessermittelebene, besitzt die Schneidvorrichtung quer zur Scherebene eine große Biegesteifigkeit und treten auch bei seitlich wirkenden, unsymetrischen Scherkräften nur geringste Verformungen des Rahmengrundkörpers auf. Der kreiszylindrische Rahmengrundkörper kann parallel zur Schermittelebene verlaufende Abflachungen am Außenumfang aufweisen, an denen weitere Bestandteile der Schneidvorrichtung angeordnet sein können, insbesondere ein die Handhabung der Schneidvorrichtung erleichternder Handgriff oder Haltegriff, der U-förmig ausgebildet ist, wobei die freien Enden des U an den Abflachungen des Rahmengrundkörpers befestigt sind und die Basis des U in einem Abstand zum Rahmengrundkörper und etwa rechtwinkelig zur Schermittelebene verläuft. Die Befestigung des Handgriffs bzw. Haltegriffs kann dabei so ausgeführt sein, dass dessen Ausrichtung oder Position bezüglich des Rahmengrundkörpers einstellbar ist und nicht nur eine Stellung oder Position vorhanden ist.

Um Verschleißerscheinungen am Rahmengrundkörper möglichst zu verhindern, ist es von Vorteil, wenn das mit dem beweglichen Schermesser zusammenwirkende, feststehende Scherelement am Rahmengrundkörper eine größere Härte als der restliche Rahmengrundkörper selbst aufweist. Das Material des Scherelements bzw. der Scherelemente kann dadurch die beim Schervorgang bzw. beim Schneidvorgang auftretenden hohen Spannungen leichter ertragen und werden dadurch Verschleißerscheinungen, etwa ein Abstumpfen der Schnittkanten bzw. Scherkanten, wesentlich reduziert. Eine lokal erhöhte Härte der Scherelementoberfläche ließe sich beispielsweise durch, insbesondere stoffschlüssiges, Aufbringen einer harten Oberflächenschicht erzielen.

Wenn das Scherelement lösbar mit dem Rahmengrundkörper verbunden ist, kann dieses im Fall von Abnutzung oder Beschädigung leicht ausgetauscht werden und dadurch die Funktionsfähigkeit und Leistungsfähigkeit der Schneidvorrichtung wieder auf den Ausgangszustand angehoben werden. Das Scherelement kann dabei vorteilhaft aus einem harten, widerstandsfähigen Material bestehen, wie etwa Kaltarbeitsstahl oder vergütetem Stahl.
Um eine sichere Verbindung zwischen Scherelement und Rahmengrundkörper zu bewirken, kann das Scherelement mittels zumindest eines Befestigungselements mit dem Rahmenkörper verbunden sein, wobei sich Befestigungselemente in Form von Schraubenelementen als vorteilhaft erwiesen haben. Alternativ zu eigenen Befestigungselementen kann das Scherelement auch Befestigungsfortsätze aufweisen, die formschlüssig in Befestigungsausnehmungen des Rahmengrundkörpers eingebracht werden, etwa in dem das Scherelement seitlich also quer zur Hauptbelastungsrichtung in den Rahmengrundkörper eingeschoben wird.

Um aus dem zu zerteilenden Gegenstand ein streifenförmiges Element herausschneiden zu können, ist es vorteilhaft, wenn das Scherelement eine von dem Schermesser mit geringem Funktionsspiel durchragbare Schneidausnehmung aufweist, die zwei mit dem Schermesser zusammenwirkende, zur Mittelebene des Schermessers symmetrische Scherkanten bildet Das flächig ausgeführte Schermesser besitzt dazu eine Dicke die zumindest annähernd der lichten Weite der Schneidausnehmung entspricht und besitzt vorteilhaft ebenfalls zwei Scherkanten. Wenn die resultierenden Betätigungskräfte für die Bewegung des Schermessers in dessen Mittelebene eingeleitet werden und dadurch in der Symmetrieebene zwischen den zusammenwirkenden Scherkanten wirken, sind auch die Scherkräfte etwa symmetrisch bezüglich der Mittelebene und es treten bei einem Schneidvorgang keine die Schneidvorrichtung und/öder den zu schneidenden Gegenstand seitlich verdrehende Momente auf.

Die Verstellrichtung des Schermessers kann insbesondere etwa rechtwinkelig zur wirksamen Oberfläche des Scherelements verlaufen, wodurch bei einem etwa hakenförmigen Schermesser mit einem Schrägungswinkel der Schneide, der zu trennende Gegenstand gegen die Oberfläche des Scherelements gezogen wird. Zwischen der stirnseitigen Oberfläche des Scherelements und den Scherkanten am Schermesser kann dabei insbesondere ein Öffnungswinkel vorhanden sein, der bewirkt, dass der Angriffspunkt der Scherwirkung an dem zu schneidenden Gegenstand im Zuge des fortschreitenden Einfahrens des Schermessers sich kontinuierlich verschiebt und die Scherkanten am Schermesser nicht mit ihrer ganzen Länge zu einem bestimmten Zeitpunkt wirksam werden, was wesentlich höhere Schneidkräfte bzw. Zugkräfte am Schermesser erfordern würde. Durch diese Abschrägung der wirksamen Scherkanten am Schermesser wird ein ziehender Schnitt erzielt, der geringeren Kraftaufwand erfordert und saubere Schnittkanten am zu trennenden Gegenstand bewirkt.

Das Schermesser kann vorzugsweise einen Schermessergrundkörper mit einer im Wesentli-chen konstanten Dicke aufweisen, wodurch einfache Fertigungsmöglichkeiten für das Schermesser bestehen. So kann etwa das Schermesser mittels Drahterodieren aus einem plattenförmigen Ausgangsmaterial geschnitten werden und dabei der Umriss des Schermessers annähernd beliebig gewählt werden. Da das Schermesser und/oder auch das Scherelement aus einem harten, widerstandsfähigem Material bestehen, wie etwa Kaltarbeitsstahl oder Vergütungsstahl, ist eine derartige Fertigungsmöglichkeit aus einem plattenförmigen Grundmaterial unter weitgehender Vermeidung von spanender Bearbeitung wesentlich einfacher durchzuführen.

Die Verbindung des Schermessers mit dem Verstellelement der Antriebsvorrichtung, insbesondere einer Kolbenstange des Fluidzylinders oder einem sonstigen Verbindungselement zur Antriebsvorriehtung kann vorzugsweise mit zumindest einem formschlüssig mit einer Verbindungsausnehmung im Schermesser zusammenwirkenden Befestigungselement hergestellt werden. So kann das Befestigungselement etwa das Schermesser sowie das Verstellelement bzw. die Kolbenstange durchragen, wozu lediglich eine einfache Ausnehmung in Form einer Bohrung in den beiden verbundenen Teilen erforderlich ist. Das Befestigungselement wird dabei auf Scherung belastet und wird dementsprechend dimensioniert. So kann etwa das Befestigungselement als Bolzen ausgeführt sein, der das Verstellelement der Antriebsvorrichtung das Schermesser durchragt und dessen Position im montierten Zustand durch Sicherungsringe fixiert ist.

Im Rahmengrundkörper ist zur Entfernung und Montage des zumindest einen Befestigungselements zumindest eine Zugangsöffnung ausgebildet, wodurch ein Austausch des Schermessers bei einem einstückigen Rahmengrundkörper ermöglicht ist. Die Längsachse des Befestigungselements in Form eines Bolzens ist dabei vorzugsweise rechtwinkelig zur Schermessermittelebene ausgerichtet.

Zur Führung des Schermessers im Rahmengrundkörper wird am Rahmengrundkörper, zur Aufnahme einer in der Scherebene des Schermessers quer zur Verstellrichtung des Schermessers auftretenden Reaktionskraft, ein das Schermesser zumindest nach einer Richtung führendes, sich in Verstellrichtung des Schermessers erstreckendes Fuhrüngselement lösbar befestigt. Das Schermesser ist dabei in Verstellrichtung der Antriebsvorrichtung durch das Führungselement geführt und kann dieses aus einem anderen, insbesondere härteren Material als der Rahmengrundkörper hergestellt sein. Durch die lösbare Verbindung mit dem Rahmengrundkörper kann das Führungselement auch ausgetauscht werden und etwa an eine geänderte Geometrie des Schermessers angepasst werden, z.B. an eine geänderte Dicke.

Das Führungselement kann dabei insbesondere mit Schraubenelementen mit dem Rahmengrundkörper lösbar verbunden sein.

Weiters kann das Führungselement aus einem Material ausgewählt aus einer Gruppe umfassend zumindest Stahl, Werkzeugstahl, Kaltarbeitsstahl bestehen, wodurch das Führungselement eine höhere Festigkeit aufweist als das Material des Rahmengrundkörpers und dieser durch die bei einem Schneidvorgang auftretenden Kräfte durch das Schermesser nicht beschädigt werden kann.

Das Führungselement kann dabei zumindest eine in Führungsausnehmungen am Schermesser eingreifende, in Verstellrichtung verlaufende Führungsleiste aufweisen, wodurch eine Führung des Schermessers nach zwei Richtungen erfolgen kann. Die Führungsleiste des Führungselements ragt dabei insbesondere etwa rechtwinkelig auf die Schermessermittelebene in eine entsprechende Führungsnut des Schermessers. Eine derartige Führungsnut kann durch Einfräsen relativ leicht hergestellt werden und dadurch die Führung des Schermessers im Führungselement und in Folge auch im Rahmengrundkörper verbessert werden. Weiters kann auch das Scherelement eine Führungswirkung auf das Schermesser ausüben und als andere Ausführungsform eines Führungselements angesehen werden.

Das Scherelement, insbesondere dessen am zu schneidenden Gegenstand anlegbare, stirnseitige Oberfläche kann eine Breite quer zur Scherebene bzw. zur Schermessermittelebene aufweisen, die zumindest dem 1,5 fachen, insbesondere zumindest dem Doppelten der Dicke des Schermessers bzw. des Schermessergrundkörpers entspricht. Dies bewirkt ein großflächiges Aufliegen des Scherelements am zu schneidenden Gegenstand und wird dieser beim Schnittvorgang stabil unterstützt und kann dadurch vom Schermesser in einem sauberen Schnitt ein durch die Dicke des Schermessers bestimmter Streifen aus dem Gegenstand ausgeschnitten werden.

Damit ein vom Schermesser aus dem zu schneidenden Gegenstand herausgetrennter Streifen leichter aus dem unmittelbaren Schneidbereich abgeführt werden kann, ist hier von Vorteil, wenn der Rahmengrundkörper eine in der Scherebene angeordnete Austragöffnung aufweist, durch die ein vom Schermesser abgetrennter Streifen eines zu trennenden Materials den Schneidbereich etwa in radialer Richtung verlassen kann. Eine derartige Austragöffnung im Rahmengrundkörper ist vorzugsweise bezüglich der Mittellängsachse der Schneidvorrichtung. etwa gegenüberliegend der Mitte eines Handgriffes oder Haltegriffes an der Schneidvorrichtung angeordnet, wodurch ein abgetrenntes Stück nicht in Richtung des Bedieners geführt wird, sondern vom Bediener weg von der Schneidvorrichtung abgeführt wird. Die Austragöffnung weist dabei vorteilhaft eine lichte Weite und lichte Länge auf, die zumindest den Abmessungen des größtmöglichen, ausklinkbaren Materialstücks entspricht.

Die erfindungsgemäße Schneidvorrichtung kann, wie bereits erwähnt, besonders vorteilhaft zur Bergung von Personen aus verunfallten Fahrzeugen eingesetzt werden, da diese besonders zum Auftrennen von Fahrzeugstrukturen geeignet ist, der Einsatz der erfindungsgemäßen Schneidvorrichtung ist jedoch auch in anderen Anwendungsgebieten, beispielsweise in der Baubranche zum Trennen von Baumaterialien, insbesondere beim Abtragen von Gebäuden, oder bei sonstigen zerstörenden Demontagearbeiten einsetzbar. Weiters ist in bestimmten Anwendungsfällen auch ein Einsatz im Bereich der Werkstückfertigung denkbar, etwa zum schneidenden Bearbeiten von Materialien, die durch sonstige Verfahren wie etwa Schweißbrennen nur schwer bearbeitet werden können.

Die Erfindung wird im Nachfolgenden anhand der in den Zeichnungen dargestellten Ausführungsbeispiele näher erläutert.

Es zeigen jeweils in stark schematisch vereinfachter Darstellung:
- Fig. 1: eine Schrägansicht einer Schneidvorrichhing mit ausgefahrenem Schermesser;
- Fig. 2: einen Längsschnitt durch eine erfindungsgemäße Schneidvorrichtung;
- Fig. 3: eine Stirnansieht einer erfindungsgemäßen Schneidevorrichtung;
- Fig. 4: ein Querschnitt durch eine erfindungsgemäße Schneidvorrichtung im Bereich der Anbindung des Schermessers an der Antriebsvorrichtung_{.}

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkinale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

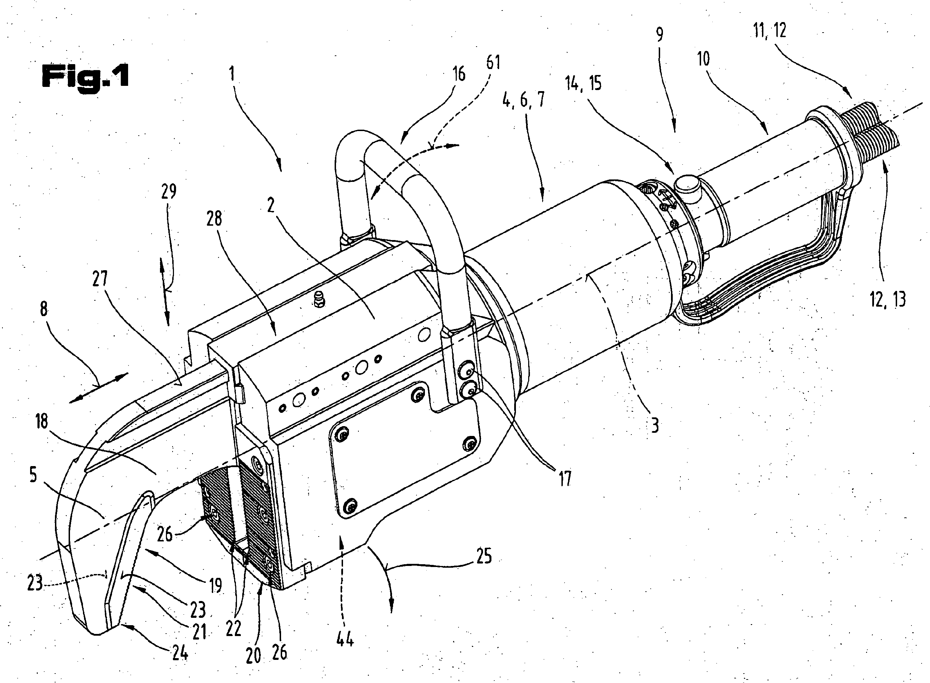

In den Fig. 1 bis 4 ist ein Ausführungsbeispiel einer erfindungsgemäßen Schneidvorrichtung 1 dargestellt, die insbesondere für die Bergung von Personen aus verunfallten Fahrzeugen geeignet ist.

Fig. 1 zeigt eine Schrägansicht der Schneidvorrichtung 1, anhand der ein Teil der wesentlichen Bauteile beschrieben wird. Die Schneidvorrichtung 1 umfasst dabei einen Rahmengrundkörper 2 der im dargestellten Ausführungsbeispiel die Hauptkomponente der Schneidvorrichtung 1 bildet. Die Bezeichnung Rahmengrundkörper 2 bezieht sich hierbei nicht unbedingt auf eine rahmenförmige Form sondern auf die Funktion als ein die Komponenten tragendes Gestell in kinematischem Sinne und könnte anstatt der Bezeichnung Rahmengrundkörper auch der Begriff "Gehäuse", "Gestell" oder einfach grundkörper" verwendet werden.

Das den Rahmengrundkörper und/oder die Antriebsvorrichtung aufbauende Leichmetall bzw. ein Bestandteil der Leichtmetalllegierung ist vorzugsweise ausgewählt aus einer Gruppe umfassend zumindest Aluminium, Magnesium und Titan. Das Material des Rahmengrundkörpers kann beispielsweise aus einer Aluminiumlegierung AlZnMgCu 7075 gebildet, sein, die eine hohe Festigkeit und eine hohe Steifigkeit aufweist.

An den Rahmengrundkörper 2 schließt in Richtung einer Längsachse 3 eine Antriebsvorrichtung 4 an, die zum Antrieb und zur Bewegung eines hakenartigen Schneidmessers 5 eingesetzt ist. Die Antriebsvorrichtung 4 ist dabei als Linearantrieb 6 ausgebildet, mit dem eine geradlinige Bewegung des Schneidmessers 5, hier parallel zur Längsachse 3, ausgeführt werden kann. Der Linearantrieb 6 ist hier durch einen Fluidzylinder bzw. Hydraulikzylinder 7 gebildet mit dem sich die für einen Schneidvorgang erforderlichen hohen Kräfte erzeugen lassen. Durch einen Doppelpfeil ist in Fig. 1 die Verstellrichtung 8 des Schneidmessers 5 angedeutet.

Der Hydraulikzylinder 7 ist etwa konzentrisch zur Längsmittelachse des Rahmengrundkörpers 2 ausgerichtet und besitzt an seinem vom Rahmengrundkörper 2 entfernten Anschlussabschnitt 9 einen Handgriff 10 durch den im dargestellten Ausführungsbeispiel Versorgungsleitungen 11 für den Hydraulikzylinder 7 geführt sind, wobei eine Versorgungsleitung 11 als Druckleitung 12 und eine andere Versorgungsleitung 11 als Rücklaufleitung 13 vorgesehen ist, und die Versorgungsleitungen 11 mit einem nicht dargestellten Hydraulikakkregät verbunden sind. Im Anschlussabschnitt 9 des Hydraulikzylinders 7 ist ein Schaltorgan 14 in Form eines Druckknopfes 15 angeordnet, mit dem eine in Fig. 1 nicht dargestellte Ventilsteuerung im Anschlussabschnitt 9 des Hydraulikzylinders 7 beeinflusst werden kann und durch die gesteuerte Zufuhr und Abfuhr von Druckfluid ein Einfahren bzw. Ausfahren des Schneidmessers 5 aus bzw. in den Rahmengrundkörper 2 gesteuert werden kann. Neben dem Handgriff 10 am Anschlussabschnitt 9 des Hydraulikzylinders 7 ist ein weiterer Haltegriff 16 vorgesehen, der am Rahmengrundkörper 2, insbesondere an dessen zur Antriebsvorrichtung 4 benachbarten Ende, mittels Befestigungsschrauben 17 befestigt ist. Die Befestigung kann dabei auch unterschiedliche Stellungen oder Positionen des Haltegriffs 16 zulassen, etwa indem am Rahmengrundkörper 2 oder an den Armen des Haltegriffs 16 mehrere unterschiedliche Befestigungspunkte vorgesehen sind.

Der Rahmengrundkörper 2 besitzt eine prismatische oder zylindrische Grundform, wobei der Querschnitt beispielsweise quadratisch, rechteckig, kreisförmig oder auch kreisförmig mit Abflaehungen ausgeführt sein kann. In einer Ausnehmung im Rähmengrundkörper 2 ist das Schermesser 5 zur Ausführung der erforderlichen Ausfahr- bzw. Einfahrbewegung verstellbar gelagert.

Das Schermesser 5 ist aus einem plattenförmigen Schermessergrundkörper 18 gebildet und besitzt einen hakenförmigen Umriss, der geeignet ist, einen in Fig. 1 nicht dargestellten Gegenstand zwischen einer zum Rahmengrundkörper 2 weisenden Hakenschneide 19 und einem an der Stirnseite des Rahmengrundkörpers 2 angeordnetem Scherelement 20 einzuklemmen und durch eine weiter erhöhte Zugkraft der Antriebsvorrichtung 4 - hier des Hydraulikzylinders 7 - schließlich zu durchtrennen. Durch die Dicke des Schermessers 5 ergeben sich an diesem zwei etwa parallele Scherkanten 21, die mit zwei Scherkanten 22 an einer Ausnehmung des Scherelements 20, durch die das Schermesser 5 herausgeführt ist, zusammenwirken und dadurch zwei parallele Scherebenen 23 gebildet sind, die mit den ebenen Seitenflächen des Schermessers 5 zusammenfallen. Durch die Belastung eines Gegenstandes entlang dieser beiden Scherebenen 23 wird so aus dem Gegenstand ein streifenförmiger Abschnitt herausgeschnitten, der durch das Scherelement 20 hindurch in das Innere des Rahmengrundkörpers 2 verformt wird und schließlich nach vollständiger Abtrennung durch die Hakenmesserspitze 24 in der durch den Pfeil 25 angedeuteten Richtung den Rahmengrundkörper 2 verlassen kann.

Der Rahmengrundkörper 2 ist im Wesentlichen aus einem Leichtmetall oder einer Leichtmetalllegierung gebildet, die eine Dichte kleiner als 5.000 kg/m³ vorzugsweise jedoch kleiner als 3.000 kg/m³ aufweist. Weiters kann auch die Antriebsvorrichtung 4 zumindest teilweise aus Leichtmetall oder einer Leichtmetalllegierung bestehen, wodurch das Gewicht einer derartigen Schneidvorrichtung 1 deutlich reduziert ist gegenüber herkömmlichen Bergegeräten, bei denen die Hauptbestandteile und insbesondere der Rahmengrundkörper 2 aus Stahl gebildet sind. So kann etwa auch das Zylinderröhr des Hydraulikzylinders 7 aus einem Leichmetall gebildet sein, wobei die Wandstärke des Zylinderrohrs entsprechend der zulässigen Festigkeit des Leichmetallwerkstoffes höher gewählt sein kann, als bei einem herkömmlichen Zylinderrohr aus Stahl. Durch die blockartige Ausführung des Rahmengrundkörpers 2 mit großen Belastungsquerschnitten besitzt dieser eine sehr hohe Steifigkeit und erfährt während eines Schneidvorganges auch keine nennenswerten Verformungen. Da während eines Schneidvorgangs im Rahmengrundkörper 2 starke Druckkräfte in Richtung der Längsachse 3 übertragen werden müssen ergibt dieser große Belastungsquerschnitt eine hohe Sicherheit gegen ein Ausknicken von Teilen des Rahmengrundkörpers 2, wogegen etwa bei einem Rahmengrundkörper 2 mit stangenartigen oder armartigen Rahmenteilen die Gefahr des Knickens besteht.

Das an der Stirnseite, also dem der Antriebsvorrichtung 4 gegenüberliegenden Ende des Rahmengrundkörpers 2 angeordnete Scherelement 20 ist zur Erhöhung der Schneidleistung und zur Vermeidung von Abnützungserscheinungen nicht aus dem selben Leichtmetallmaterial wie der Rahmengrundkörper 2 gebildet, sondern aus einem harten, verschleißfesten Werkstoff und ist insbesondere als auswechselbares Scherelement 20 gebildet, das mittels Befestigungsschrauben 26 mit dem Rahmengrundkörper 2 verbunden sein kann. Im dargestellten Ausführungsbeispiel ist das Scherelement 20 einteilig ausgeführt und besitzt eine Ausnehmung für die Durchführung des Schermessers 5, es ist jedoch auch eine mehrteilige Ausführung des Scherelementes 20 möglich. Die Führung des Schermessers 5 im Rahmengrundkör-, per 2 erfolgt einerseits in seitlicher Richtung durch die-Seitenflächen bzw. die Scherebenen 23 des Schermessers 5, die mit geringem Funktionsspiel zwischen den Scherkanten 22 des Scherelementes 20 geführt sind und weiters an der Rückseitenfläche 27 des Schermessers 5, durch ein Führungselement 28, das lösbar im Rahmengrundkörper 2 befestigt ist, eine Führung quer zur Längsachse 3 also in Richtung des Doppelpfeiles 29 eine Führung des Schermessers 5 bewirkt ist. Durch die Führung des Schermessers 5 an seiner Rückseitenfläche 27 mit einer abhebesicheren Führungsanordnung kann diese auch im Gebrauch entstehende Kippmomente, die eine Verdrehung des Schermessers 5 in der Scherebene 23 bewirken würden, aufnehmen und ein Verkeilen des Schermessers 5 in seiner Längsführung ist wirkungsvoll vermieden.

Die stirnseitige Oberfläche des Scherelements 20 verläuft etwa rechtwinkelig zur Längsachse 3 der Schneidvorrichtung 1 während die Hakenschneide 19 bezüglich der Längsachse nicht rechtwinkelig sondern dazu winkelig verläuft, wodurch nicht die gesamte Länge der Scherkanten 21 an einem ebenen Werkstück gleichzeitig in Eingriff tritt, sondern sich ein ziehender Schnitt in Richtung zur Hakenmesserspitze 20 verlaufend ergibt. Damit bei diesem Öffnungswinkel zwischen Scherelement 20 und der Hakenschneide 19 ein zu schneidender Gegenstand nicht abgleitet, können die Oberflächen des Scherelements 20 als auch die Hakenschneide 19 des Schermessers 5 mit einer Verzahnung versehen sein, die ein Ausgleiten des zu schneidenden Gegenstandes hemmt.

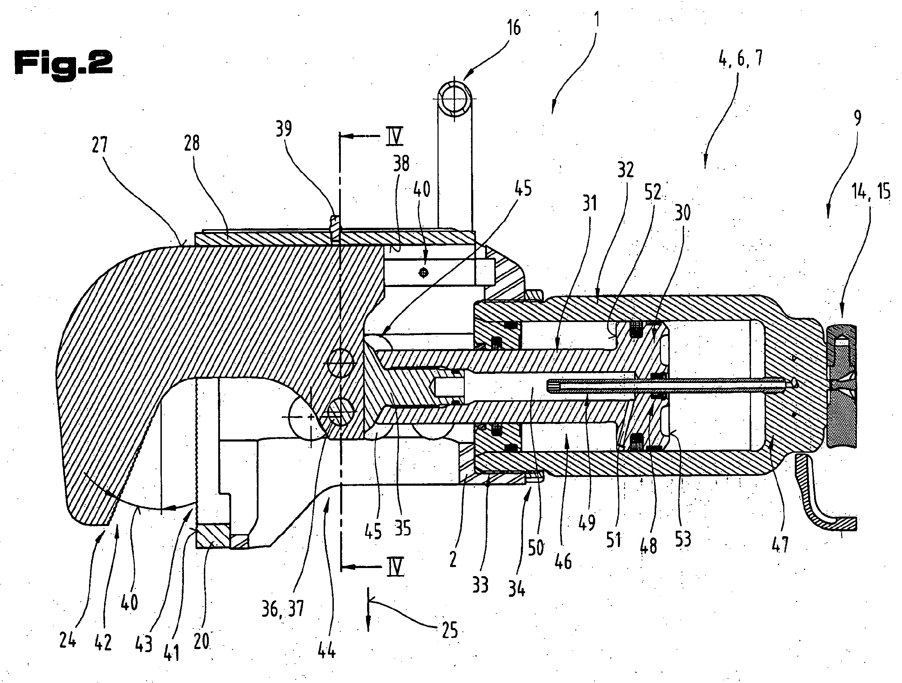

Fig. 2 zeigt einen Längsschnitt durch die Schneidvorrichtung 1, wobei das Schermesser 5 in vollständig in den Rahmengrundkörper 2 eingezogenen Zustand dargestellt ist. Die Zugkraft auf das hakenförmige Schermesser 5 wird dabei von einem druckmittelbeaufschlagten Kolben 30 im Hydraulikzylinder 7 bewirkt, der mit einer Kolbenstange 31 verbunden ist, die aus dem Hydraulikzylinder 7 in Richtung der Längsachse aus bzw eingefahren werden kann. Der Kolben 30 ist dabei in einem Zylinderrohr 32 des Hydraulikzylinders geführt und ist dieses mittels eines Gewindes 33 an seinem kolbenstangenseitigen Ende in ein Innengewinde des Rahmengrundkörpers 2 eingeschraubt. Um ein versehentliches Lösen des Zylinderrohres 32 vom Rahmengrundkörper 2 im rauen Einsatz zu vermeiden, ist das Zylinderrohr 32 zusätzlich noch mit einer Spannmutter 34 axial gegen den Rahmengrundkörper 2 vorspannt.

Die Verbindung zwischen der Kolbenstange 31 und dem Schermesser 5 erfolgt mittels eines Verbindungselements 35, von dem ein Ende mit einem Innengewinde der Kolbenstange 31 verschraubt ist und an einem zweiten Ende eine schlitzartige Ausnehmung aufweist, wodurch das Verbindungselement 35 das flache Schermesser 5 an seitlich umfassen kann und mittels Befestigungselementen 36 in Form von Bolzen 37 eine formschlüssige schub- und zugfeste Verbindung zwischen dem Verbindungselement 35 und dem Schermesser 5 hergestellt ist. Im Schermesser 5 und im Verbindungselement 35 sind dazu entsprechende Querbohrungen die rechtwinkelig zu den Scherebenen 23 verlaufen, vorgesehen, in denen die Befestigungselemente 36, hier in Form von Bolzen 37 eingesetzt werden können. Die geradlinige Bewegung des Kolbens 30 wird somit in eine ebenfalls gradlinige Bewegung des Schermessers 5 in Richtung der Längsachse 3 übertragen, wobei wie bereits anhand von Fig. 1 beschrieben, das Schermesser 5 an einer Rückseitenfläche 27 in einem Führungselement 28 zusätzlich geführt ist. Eine mit der Rückseitenfläche 27 zusammenwirkende Führungsfläche 38 des Führungselements 28 und die Rückseitenfläche 27 können dabei durch einen Schmiernippel 39 mit einem Schmierstoff versorgt werden, wodurch der Reibungswiderstand zwischen Rückseitenfläche 27 und der Führungsfläche 38 herabgesetzt werden kann. Wie Fig. 2 weiters zeigt kann das Führungselement 28 mittels Schrauben 40 lösbar im Rahmengrundkörper 2 befestigt sein.

Fig. 2 zeigt weiters den Schrägungswinkel 40 zwischen der Hakenschneide 19 und der Stirnfläche 41 des Scherelements 20.

Dieser Schrägungswinkel 40 zwischen der Hakenschneide 19 und der Stirnfläche 41 bewirkt eine Reaktionskraft auf das Schermesser 5 quer zur Längsachse 3, die im dargestellten Ausführungsbeispiel vom Führungselement 28 aufgenommen und in den Rahmengrundkörper 2 eingeleitet wird. Um ein Abgleiten der Schneidvorrichtung vom zu schneidenden Gegenstand zu vermeiden ist sowohl die Hakenschneide 19 mit einer Verzahnung 42 als auch das Scherelement 20 mit einer Verzahnung 43 ausgestattet, die sich bei einem Schneidvorgang in die Oberfläche des zu schneidenden Gegenstandes eindrückt und dadurch die Gefahr eines Abgleitens verringert ist.

Fig. 2 zeigt weiters eine Austragsöffnung 44 im Rahmengrundkörper 2, durch die ein aus dem Gegenstand herausgeschnittener Streifen die Schneidvorrichtung 1 in Richtung des Pfeiles 25 verlassen kann. Im Rahmengrundkörper 2 sind weiters Zugangsöffnungen 45 vorgesehen, durch die das Montieren bzw. Demontieren der Befestigungselemente 36 in Form von Bolzen 37 möglich ist. Dazu wird durch Betätigung des Hydraulikzylinders 7 der Kolben 30 mit der Kolbenstange 31 so weit ausgefahren, dass die Befestigungselemente 36 mit den Zugangsöffnüngen 45 fluchten und dadurch ein axiales Einsetzen bzw. Demontieren der Bolzen 37 möglich ist.

Wie aus dem Stand der Technik bekannt, können Dichtungen beispielsweise zur Abdichtung des Kolbens 30, zur Abdichtung der Kolbenstangendurchführung sowie beim kolbenstangenseitig eingesetzten Zylinderboden vorgesehen sein. Um außen liegende Druckmittelleitungen oder im Zylinderrohr 32 verlaufende Druckmittelkanäle zu vermeiden, wird das Druckfluid in den kolbenstangenseitigen Arbeitsraum 46 abgedichtet durch die Kolben - Kolbenstangenanordnung zugeführt. Die Kolbenstange 31 ist dazu hohl ausgeführt und ragt vom Zylinderkopf 47 durch eine abgedichtete Durchführung 48 ein Druckrohr 49 koaxial in das hohle Innere der Kolbenstange 31, das hier als Kolbenstangenhohlraum 50 bezeichnet ist. Von diesem Kolbenstangenhohlraum 50 wird das Druckmittel, hier ein Hydraulikfluid, durch eine Querbohrung 51 an die im Arbeitsräum 46 zugewendete rückseitige Ringfläche 52 des Kolbens 30 geführt.

Bei einem Schneidvorgang, bei dem das Schermesser 5 in den Rahmengrundkörper 2 hineingezogen wird, wird über das Druckrohr 49, den Kolbenstangenhohlraum 50 und die Querbohrung 51 dem Arbeitsraum 46 Druckfluid zugeführt und dadurch der Kolben 30 mit Kolbenstange 31 und Schermesser 5 eingezogen. Zum Ausfahren des Schermessers 5 wird Druckfluid der zylinderkopfseitigen Kolbenfläche 53 zugeführt. Die Umsteuerung zwischen der Druckmittelzufuhr zum Arbeitsraum 46 und zum zylinderkopfseitigen Arbeitsraum erfolgt über das bereits anhand von Fig. 1 beschriebene Schaltorgan 14 in Form eines Druckknopfes. 15.

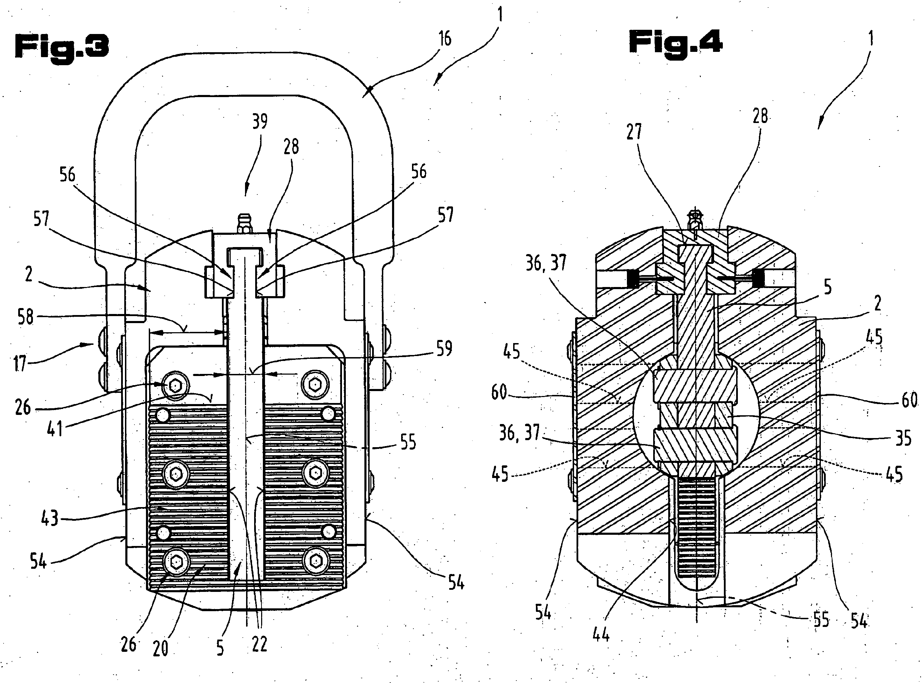

Fig. 3 zeigt eine Stirnansicht der Schneidvorrichtung 1 die zeigt, dass der Rahmengrundkörper 2 eine kreiszylindrische Grundform aufweist und an den Seitenflächen 54 zur Gewichtsersparnis und um eine schlankere Bauform zu erzielen, Abflachungen aufweist. Das Schermesser 5 ist, wie bereits anhand von Fig. 1 und Fig. 2 beschrieben, in der Scherebene durch einen Linearantrieb 6 sowie das Führungselement 28 geführt, sowie quer zur Mittenebene 55 durch das Scherelement 20 bzw. dessen Scherkanten 22, die sich als Schnittkanten zwischen der Stirnfläche 41 und der Ausnehmung im Seherelement 20 ergeben. Die Stirnansicht zeigt, dass das Führungselement 28 Führungsleisten 56 aufweist, die in seitliche Führungsausnehmungen 57 des Schermessers 5 eingreifen. Dadurch ist zwischen dem Schermesser 5 und dem Führungselement 28 eine T - Nut - förmige Führung gegeben, was eine hohe Führungsstabilität bewirkt.

Die Stirnansicht zeigt weiters die mehrfache Verschraubung des Scherelements 20 mittels Befestigungsschrauben 26 mit dem Rahmengrundkörper 2. Beiderseits des Schermessers 5 besitzt das Scherelement 20 eine Breite 58 die mehr als dem Eineinhalbfachen, vorzugsweise dem Doppelten der Dicke 59 des Schermessers 5 entspricht. Durch diese Breite 58 des Scherelements 20 ergibt sich eine flächige Unterstützung eines zu schneidenden Gegenstandes und dadurch auch saubere Schnittqualität.

Fig. 4 zeigt einen Schnitt durch die Schneidvorrichtung 1 entlang der Schnittebene IV - IV in Fig. 2, in der der große Querschnitt des aus Leichtmetall gebildeten Rahmengrundkörpers 2 erkennbar ist und weiters die Verbindung des Schermessers 5 mit dem Verbindungselement 35 mittels den Befestigungselementen 36 in Form von Bolzen 37. Die Bolzen 37 weisen dabei an einem Ende einen Kopf auf sowie am zweiten Ende eine Ringnut zum Anbringen von Sicherungsringen. Die Montage bzw. Demontage der Befestigungselemente erfolgt dabei in axialer Richtung, also quer zur Mittelebene 55, wozu im Rahmengrundkörper 2 entsprechende Zugangsöffnungen 45, hier in Form von Bohrungen ausgebildet sind. Diese Zugangsöffnungen können, wie in Fig. 1 und Fig. 4 dargestellt mittels eines Abdeckelements 60 verschlossen sein.

In Fig. 4 ist wieder das Führungselement 28 erkennbar, dessen Führungsflächen für das Schermesser 5 die Innenkontur einer T-Nut-Schiene bilden und dadurch Kräfte in allen Richtungen außer der Verstellrichtung des Schermessers 5 gemäß Doppelpfeil 8 in Fig. 1 in den Rahmengrundkörper 2 einleiten kann. Die Führung des Schermessers 5 durch ein eigenes Führungselement 28 entlastet auch die Antriebsvorrichtung 4, insbesondere den Hydraulikzylinder 7, von Querkräften, wodurch aus dem Gebrauch herrührende Verschleißerscheinungen an der Schneidvorrichtung 1 vorteilhaft auf leicht auswechselbare Elemente wie das Schermesser 5, das Scherelement 20 sowie das Führungselement 28 beschränkt bleiben.

In Fig. 1 ist weiters eine Schwenkbarkeit des Haltegriffs 16 in Richtung des Doppelpfeiles 61 angedeutet, durch die die Schneidvorrichtung 1 etwa an beengte Platzverhältnisse angepasst werden kann. Die Befestigungsschrauben 17 können dazu auch durch eine werkzeuglos betätigbare, verstellbare Befestigungsvorrichtung ersetzt sein.

Die Ausführungsbeispiele zeigen mögliche Ausführungsvarianten der Schneidvorrichtung, wobei an dieser Stelle bemerkt sei, das, im Rahmen des unabhängigen Anspruchs, die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang des unabhängigen Anspruchs mit umfasst.

Der Ordnung halber sei abschließend daraufhingewiesen, dass zum besseren Verständnis des Aufbaus der Schneidvorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Im Rahmen des unabhängigen Anspruchs können die einzelnen in den Fig. 1, 2, 3, 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Schneidvorrichtung | 41 | Stirnfläche |
| 2 | Rahmengrundkörper | 42 | Verzahnung |
| 3 | Längsachse | 43 | Verzahnung |
| 4 | Auftriebsvorrichtung | 44 | Austragsöffnung |
| 5 | Schermesser | 45 | Zugangsöffhung |
| | | | |
| 6 | Linearantrieb | 46 | Arbeitsraum |
| 7 | Hydraulikzylinder | 47 | Zylinderkopf |
| 8 | Doppelpfeil | 48 | Durchführung |
| 9 | Anschlussabschnitt | 49 | Druckrohr |
| 10 | Handgriff | 50 | Kolbenstangenhohlraum |
| | | | |
| 11 | Versorgungsleitung | 51 | Querbohrung |
| 12 | Druckleitung | 52 | Ringfläche |
| 13 | Rücklaufleitung | 53 | Kolbenfläche |
| 14 | Schaltorgang | 54 | Seitenfläche |
| 15 | Druckknopf | 55 | Mittelebene |
| | | | |
| 16 | Haltegriff | 56 | Führungsleiste |
| 17 | Befestigungsschraube | 57 | Führungsausnehmungen |
| 18 | Schermessergrundkörper | 58 | Breite |
| 19 | Hakenschneide | 59 | Dicke |
| 20 | Scherelement | 60 | Abdeckelement |
| | | | |
| 21 | Scherkante | 61 | Doppelpfeil |
| 22 | Scherkante | | |
| 23 | Scherebenen | | |
| 24 | Hakenmesserspitze | | |
| 25 | Pfeil | | |
| | | | |
| 26 | Befestigungsschraube | | |
| 27 | Rückseitenfläche | | |
| 28 | Führungselement | | |
| 29 | Pfeil | | |
| 30 | Kolben | | |
| | | | |
| 31 | Kolbenstange | | |
| 32 | Zylinderrohr | | |
| 33 | Gewinde | | |
| 34 | Spannmutter | | |
| 35 | Verbindungselement | | |
| | | | |
| 36 | Befestigungselement | | |
| 37 | Bolzen | | |
| 38 | Führungsfläche | | |
| 39 | Schmiermittel | | |
| 40 | Schrägungswinkel | | |

## Patentansprüche

1. Schneidvorrichtung (1) umfassend einen Rahmengrundkörper (2), zumindest ein am Rahmengrundkörper (2) angeordnetes, feststehendes Scherelement (20), eine am Rahmengrundkörper (2) angeordnete Antriebsvorrichtung (4), insbesondere in Form eines Fluidzylinders (7), und ein mit der Antriebsvorrichtung (4) antriebsverbundenes, am Rahmengrundkörper (2) beweglich geführtes Schermesser (5), das mit dem feststehenden Scherelement (20) zusammenwirkt, wobei der Rahmengrumdkörper (2) und/oder die Antriebsvorrichtung (4) im Wesentlichen aus einem Leichtmetall oder einer Leichtmetalllegierung mit einer Dichte kleiner als 5000 kg/m³, insbesondere kleiner als 3000 kg/m³ gebildet ist, **dadurch gekennzeichnet, dass** am Rahmengrundkörper (2) zur Aufnahme einer in der Mittelebene (55) des Schermessers (5) quer zur Verstellrichtung (8) des Schermessers (5) auftretenden Reaktionskraft ein das Schermesser (5) zumindest nach einer Richtung, vorzugsweise nach mehreren Richtungen, führendes Führungselement (28) lösbar befestigt ist und das Führungselement (28) zumindest eine in Führungsausnehmungen (57) am Schermesser (5) eingreifende Führungsleiste (56) aufweist.

2. Schneidvorrichtung (1) nach Anspruch 1, **dadurch gekennzeichnet, dass** das Leichtmetall oder ein Bestandteil der Leichtmetalllegierung aus einer Gruppe umfassend zumindest Aluminium, Aluminiumlegierung, Magnesium, Titan ausgewählt ist.

3. Schneidvorrichtung (1) nach Anspruch 1 oder 2, **dadurch gekennzeichnet, dass** der Rahmengrundkörper (2) eine das Schermesser (5) zumindest teilweise aufnehmende Ausnehmung (57) aufweist.

4. Schneidvorrichtung (1) nach einem der Ansprüche 1 bis 3, **dadurch gekennzeichnet, dass** der Rahmengrundkörper (2) zumindest abschnittsweise eine kreiszylindrische Grundform aufweist.

5. Schneidvorrichtung (1) nach einem der Ansprüche 1 bis 4, **dadurch gekennzeichnet, dass** das mit dem beweglichen Schermesser (5) zusammenwirkende feststehende Scherelement (20) eine größere Härte als der Rahmengrundkörper (2) aufweist.

6. Schneidvorrichtung (1) nach einem der Ansprüche 1 bis 5, **dadurch gekennzeichnet, dass** das Scherelement (20) lösbar mit dem Rahmengrundkörper (2) verbunden ist.

7. Schneidvorrichtung (1) nach Anspruch 6, **dadurch gekennzeichnet, dass** das Scherelement (20) mittels zumindest eines Befestigungselement (26) mit dem Rahmengrundkörper (2) verbunden ist.

8. Schneidvorrichtung (1) nach Anspruch 7, **dadurch gekennzeichnet, dass** das Befestigungselement (26) durch ein Schraubenelement gebildet sind.

9. Schneidvorrichtung (1) nach einem der Ansprüche 1 bis 8, **dadurch gekennzeichnet, dass** das Scherelement (20) eine von dem Schermesser (5) mit geringem Funktionsspiel durchragbare Schneidausnehmung aufweist, die zwei mit dem Schermesser (5) zusammenwirkende, zur Mittelebene (55) des Schermessers (5) symmetrische Scherkanten (22) bildet

10. Schneidvorrichtung (1) nach einem der Ansprüche 1 bis 9, **dadurch gekennzeichnet, dass** die Verstellrichtung (8) des Schermessers (5) zumindest annähernd rechtwinkelig auf die wirksame Oberfläche des Scherelements (20) verläuft.

11. Schneidvorrichtung (1) nach einem der Ansprüche 1 bis 10, **dadurch gekennzeichnet, dass** das Schernnesser (5) einen Schermessergrundkörper (18) mit einer im Wesentlichen konstanten Dicke (59) aufweist.

12. Schneidvorrichtung (1) nach einem der Ansprüche 1 bis 11, **dadurch gekennzeichnet, dass** das Schermesser (5) mit zumindest einem formschlüssig mit einer Verbindungsausnehmung im Schermesser (5) zusammenwirkenden Befestigungselement (36) mit der Antriebsvorrichtung (4), insbesondere einer Kolbenstange (31) des Fluidzylinders (7), verbunden ist,

13. Schneidvorrichtung (1) nach Anspruch 12, **dadurch gekennzeichnet, dass** im Rahmengrundkörper (2) zumindest eine Zugangsöffnung (45) zur Entfernung und Montage des zumindest einen Befestigungselements (36) ausgebildet ist.

14. Schneidvorrichtung (1) nach einem der Ansprüche 1 bis 13, **dadurch gekennzeichnet, dass** das Führungselement (28) mit dem Rahmengrundkörper (2) verschraubt ist.

15. Schneidvorrichtung (1) nach einem der Ansprüche 1 bis 14, **dadurch gekennzeichnet, dass** das Führungselement (28) aus einem Material ausgewählt aus einer Gruppe umfassend zumindest Stahl, Werkzeugstahl, Kaltarbeitsstahl besteht

16. Schneidvorrichtung (1) nach einem der Ansprüche 1 bis 15, **dadurch gekennzeichnet, dass** das Scherelement (20) eine Breite (58) quer zur Mittelebene (55) aufweist, die zumindest dem 1,5 fachen, insbesondere zumindest dem Doppelten der Dicke (59) des Schermessers (5) bzw. des Schennessergrundkörpers (18) entspricht

17. Schneidvorrichtung (1) nach einem der Ansprüche 1 bis 16, **dadurch gekennzeichnet, dass** der Rahmengrundkörper (2) eine in der Mittelebene (55) angeordnete Austragöffnung (44) aufweist, durch die ein vom Schermesser (5) abgetrenntes Stück eines zu trennenden Gegenstands den Schneidbereich etwa in der Mittelebene (55) verlassen kann.

## Claims

1. A cutting device (1) comprising a main frame body (2), at least one stationary cutting element (20) disposed on the main frame body (2), a drive system (4) disposed on the main frame body (2), in particular in the form of a fluid cylinder (7), and a cutting blade (5) drivingly connected to the drive system (4) and guided in its movement on the main frame body (2) which cooperates with the stationary cutting element (20), wherein the main frame body (2) and/or the drive system (4) is made from an essentially light metal or a light metal alloy with a density of less than 5000 kg/m³, in particular less than 3000 kg/m³, **characterized in that** a guide element (28) guiding the cutting blade (5) in at least one direction, preferably in several directions, is detachably secured to the main frame body (2) for absorbing a reaction force which occurs in the mid-plane (55) of the cutting blade (5) transversely to the displacement direction (8) of the cutting blade (5) and the guide element (28) has at least one guide bar (56) locating in guide recesses (57) on the blade (5).

2. The cutting device (1) according to claim 1, **characterized in that** the light metal or an element of the light metal alloy is selected from a group comprising at least aluminum, aluminum alloy, magnesium, titanium.

3. The cutting device (1) according to claim 1 or 2, **characterized in that** the main frame body (2) has a recess (57) at least partially accommodating the cutting blade (5).

4. The cutting device (1) according to one of claims 1 to 3, **characterized in that** the main frame body (2) has a circular cylindrical basic shape in at least certain portions.

5. The cutting device (1) according to one of claims 1 to 4, **characterized in that** the stationary cutting element (20) cooperating with the displaceable cutting blade (5) has a higher hardness than the main frame body (2).

6. The cutting device (1) according to one of claims 1 to 5, **characterized in that** the cutting element (20) is detachably connected to the main frame body (2).

7. The cutting device (1) according to claim 6, **characterized in that** the cutting element (20) is connected to the main frame body (2) by means of at least one fixing element (26).

8. The cutting device (1) according to claim 7, **characterized in that** the fixing element (26) is provided in the form of a screw element.

9. The cutting device (1) according to one of claims 1 to 8, **characterized in that** the cutting element (20) has a cutting recess through which the cutting blade (5) extends with a slight functional clearance, which forms two shearing edges (22) cooperating with the cutting blade (5) disposed symmetrically with respect to the mid-plane (55) of the cutting blade (5).

10. The cutting device (1) according to one of claims 1 to 9, **characterized in that** the displacement direction (8) of the cutting blade (5) extends at least approximately at a right angle with respect to the active surface of the cutting element (20).

11. The cutting device (1) according to one of claims 1 to 10, **characterized in that** the cutting blade (5) has a cutting blade main body (18) with an essentially constant thickness (59).

12. The cutting device (1) according to one of claims 1 to 11, **characterized in that** the cutting blade (5) is connected to the drive system (4) by at least one fixing element (36) positively cooperating with a connecting recess in the cutting blade (5), in particular a piston rod (31) of the fluid cylinder (7).

13. The cutting device (1) according to claim 12, **characterized in that** at least one access orifice (45) is provided in the main frame body (2) for removing and fitting a fixing element (36).

14. The cutting device (1) according to one of claims 1 to 13, **characterized in that** the guide element (28) is screwed to the main frame body (2).

15. The cutting device (1) according to one of claims 1 to 14, **characterized in that** the guide element (28) is made from a material selected from a group comprising at least steel, tool steel, cold-worked steel.

16. The cutting device (1) according to one of claims 1 to 15, **characterized in that** the cutting element (20) has a width (58) extending transversely to the mid-plane (55) which corresponds to at least 1.5 times, in particular at least twice, the thickness (59) of the cutting blade (5) or the cutting blade main body (18).

17. The cutting device (1) according to one of claims 1 to 16, **characterized in that** the main frame body (2) has an extraction orifice (44) disposed in the mid-plane (55) through which a piece cut by the cutting blade (5) from an object being cut can be removed from the cutting area roughly in the mid-plane (55).

## Revendications

1. Dispositif de coupe (1) comprenant un corps de châssis principal (2), au moins un élément de coupe stationnaire (20) disposé de manière fixe sur le corps de châssis principal (2), un système d'entraînement (4) disposé sur le corps de châssis principal (2), en particulier sous la forme d'un vérin hydraulique (7), et une lame de coupe (4) reliée de manière entraînée au système d'entraînement (4) et guidé dans son déplacement sur le corps de châssis principal (2), qui coopère avec l'élément de coupe stationnaire (20), dans lequel le corps de châssis principal (2) et/ou le système d'entraînement (4) est constitué d'un métal essentiellement léger, ou d'un alliage de métal léger ayant une densité inférieure à 5 000 kg/m³, en particulier inférieure à 3 000 kg/m³, **caractérisé en ce qu'**un élément de guidage (28) guidant la lame de coupe (5) dans au moins une direction, de préférence plusieurs directions, est fixé de manière amovible sur le corps de châssis principal (2) pour absorber une force de réaction qui survient dans le plan médian (55) de la lame de coupe (5) transversalement à la direction de déplacement (8) de la lame de coupe (5), et **en ce que** l'élément de guidage (28) présente au moins une barre de guidage (56) s'engageant dans un évidement de guidage (57) de la lame de coupe (5).

2. Dispositif de coupe (1) selon la revendication 1, **caractérisé en ce que** le métal léger ou un composant de l'alliage de métal léger est sélectionné dans un groupe comprenant au moins l'aluminium, un alliage d'aluminium, le magnésium et le titane.

3. Dispositif de coupe (1) selon la revendication 1 ou 2, **caractérisé en ce que** le corps de châssis principal (2) présente un évidement (57) recevant au moins par endroits la lame de coupe (5).

4. Dispositif de coupe (1) selon l'une quelconque des revendications 1 à 3, **caractérisé en ce que** le corps de châssis principal (2) présente au moins par endroits une forme basique cylindrique circulaire.

5. Dispositif de coupe (1) selon l'une quelconque des revendications 1 à 4, **caractérisé en ce que** l'élément de coupe stationnaire (20) fixé en coopération avec la lame de coupe mobile (5) a une dureté supérieure au corps de châssis principal (2).

6. Dispositif de coupe (1) selon l'une quelconque des revendications 1 à 5, **caractérisé en ce que** l'élément de coupe (20) est relié au corps de châssis principal (2) de manière détachable.

7. Dispositif de coupe (1) selon la revendication 6, **caractérisé en ce que** l'élément de coupe (20) est relié au corps de châssis principal (2) par l'intermédiaire d'au moins un élément de fixation (26).

8. Dispositif de coupe (1) selon la revendication 7, **caractérisé en ce que** l'élément de fixation (26) est formé par un élément fileté.

9. Dispositif de coupe (1) selon l'une quelconque des revendications 1 à 8, **caractérisé en ce que** l'élément de coupe (20) présente un évidement de coupe à travers lequel la lame de coupe (5) s'étend avec un léger jeu fonctionnel, formant deux bords de cisaillement (22) coopérant avec la lame de coupe (5) et symétriques par rapport au plan médian (55) de la lame de coupe (5).

10. Dispositif de coupe (1) selon l'une quelconque des revendications 1 à 9, **caractérisé en ce que** la direction de déplacement (8) de la lame de coupe (5) s'étend au moins approximativement perpendiculairement par rapport à la surface supérieure active de l'élément de coupe (20).

11. Dispositif de coupe (1) selon l'une quelconque des revendications 1 à 10, **caractérisé en ce que** la lame de coupe (5) a un corps principal de lame de coupe (18) ayant une épaisseur essentiellement constante (59).

12. Dispositif de coupe (1) selon l'une quelconque des revendications 1 à 11, **caractérisé en ce que** la lame de coupe (5) est reliée au système d'entraînement (4) par au moins un élément de fixation (36) coopérant positivement avec un évidement de connexion dans la lame de coupe (5), en particulier une tige de piston (31) du vérin hydraulique (7).

13. Dispositif de coupe (1) selon la revendication 12, **caractérisé en ce qu'**au moins un orifice d'accès (45) est fourni dans le corps de châssis principal (2), pour enlever et monter un élément de fixation (36).

14. Dispositif de coupe (1) selon l'une quelconque des revendications 1 à 13, **caractérisé en ce que** l'élément de guidage (28) est vissé sur le corps de châssis principal (2).

15. Dispositif de coupe (1) selon l'une quelconque des revendications 1 à 14, **caractérisé en ce que** l'élément de guidage (28) est constitué d'un matériau choisi dans un groupe comprenant au moins l'acier, l'acier inoxydable et l'acier usiné à froid.

16. Dispositif de coupe (1) selon l'une quelconque des revendications 1 à 15, **caractérisé en ce que** l'élément de coupe (20) a une largeur (58) s'étendant transversalement au plan médian (55) qui correspond à au moins 1,5 fois, en particulier au moins deux fois, l'épaisseur (59) de la lame de coupe (5) du corps principal de lame de coupe (18).

17. Dispositif de coupe (1) selon l'une quelconque des revendications 1 à 16, **caractérisé en ce que** le corps de châssis principal (2) a un orifice d'extraction (44) disposé dans le plan médian (55), à travers lequel un morceau retiré par la lame de coupe (5) d'un objet en cours de coupe peut être enlevée de la zone de coupe dans le plan médian (55).
